# EUROPÄISCHE PATENTANMELDUNG

(11) **EP 3 184 349 A1**
(43) Veröffentlichungstag der Anmeldung: **28.06.2017**
(21) Anmeldenummer: 15201978.2
(22) Anmeldetag: 22.12.2015
(51) Int. Cl.: B60L 1/00, B60L 7/16, B60L 9/18, B60L 11/08, B60L 11/12, B60L 5/00, B60L 7/06, B60L 7/22

(54) **ENERGIEVERSORGUNGSSYSTEM FÜR EIN FAHRZEUG UND FAHRZEUG ELEKTRISCHEM TRAKTIONSSYSTEM**

(71) Anmelder: Siemens Aktiengesellschaft, 80333 München (DE)
(72) Erfinder: Meinert, Michael, 91056 Erlangen (DE); Melzer, Michael, 91207 Lauf an der Pegnitz (DE); Fodor, Dan Niculae, 91227 Leinburg-Entenberg (DE); Lübben, Edzard, 91056 Erlangen (DE)

(57) **Zusammenfassung**

Die Erfindung betrifft ein Energieversorgungssystem (5) für ein Fahrzeug (1) und ein Fahrzeug (1) mit einem elektrischen Traktionssystem (3). Das Energieversorgungssystem (5) umfasst einen ersten Stromkreis (15) mit wenigstens einem elektrischen Fahrmotor (7, 9) des Fahrzeugs (1), wenigstens einem Traktionsstromrichter (11, 13) zur Energieversorgung des wenigstens einen Fahrmotors (7, 9) und einem mit wenigstens einem Traktionsstromrichter (11, 13) verbundenen ersten Zwischenkreis (21), einen von dem ersten Stromkreis (15) galvanisch getrennten zweiten Stromkreis (17) mit einem zweiten Zwischenkreis (57), und eine induktive Kopplung (71) der beiden Zwischenkreise (21, 57) zur Energieübertragung zwischen den beiden Stromkreisen (15, 17)

## Beschreibung

Die Erfindung betrifft ein Energieversorgungssystem eines Fahrzeugs mit einem elektrischen Traktionssystem.

Insbesondere betrifft die Erfindung Minenfahrzeuge. Übliche Minenfahrzeuge mit sehr großen Ladekapazitäten fahren angetrieben durch Diesel-elektrische Systeme mit einem Verbrennungsmotor und einem von dem Verbrennungsmotor angetriebenen Wechselstromgenerator, der das elektrische Antriebssystem des Fahrmotors versorgt, und teilweise an mit Gleichspannung versorgten Oberleitungen bergauf. Voll beladen bergauf können so nur sehr geringe Geschwindigkeiten erreicht werden, wenn ausschließlich die von dem Diesel-elektrischen System generierte Energie für den Fahrantrieb verwendet wird. Bei einer Verwendung von Gleichspannungsoberleitungen in bestimmten Teilbereichen der Fahrstrecke kann die Geschwindigkeit erhöht werden. Gleichspannungsoberleitungen sind jedoch nur in wenigen Minen vorhanden. Außerdem stehen Oberleitungen meist insbesondere in Lade- und Entladebereichen nicht zur Verfügung. Voll beladen bergab können ebenfalls nur geringe Geschwindigkeiten realisiert werden, da die elektrischen Antriebsmotoren und die Bremswiderstände leistungsmäßig begrenzt sind. Aus Kostengründen wird bergab meist keine Oberleitung ausgeführt, so dass kein rekuperatives Bremsen möglich ist.

Der Erfindung liegt die Aufgabe zugrunde, ein verbessertes Energieversorgungssystem eines Fahrzeugs mit einem elektrischen Traktionssystem, insbesondere eines Minenfahrzeugs, anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßes Energieversorgungssystem eines Fahrzeugs mit einem elektrischen Traktionssystem umfasst einen ersten Stromkreis mit wenigstens einem elektrischen Fahrmotor des Fahrzeugs, wenigstens einem Traktionsstromrichter zur Energieversorgung des wenigstens einen Fahrmotors und einem mit wenigstens einem Traktionsstromrichter verbundenen ersten Zwischenkreis. Außerdem umfasst das Energieversorgungssystem einen von dem ersten Stromkreis galvanisch getrennten zweiten Stromkreis mit einem zweiten Zwischenkreis und eine induktive Kopplung der beiden Zwischenkreise zur Energieübertragung zwischen den beiden Stromkreisen.

Durch die induktive Kopplung der beiden Zwischenkreise ist Energie, beispielsweise Bremsenergie wenigstens eines Fahrmotors, von dem ersten Stromkreis in den zweiten Stromkreis übertragbar, die beispielsweise zur Energieversorgung von Verbrauchern in dem zweiten Stromkreis verwendet werden kann. Der zweite Stromkreis ist dabei beispielsweise ein Hilfsbetriebestromkreis zur Energieversorgung von Hilfsbetrieben des Fahrzeugs wie Kompressoren oder einer Klimaanlage, die in den zweiten Stromkreis integriert sind. Durch die induktive Kopplung der beiden Zwischenkreise kann also Energie des ersten Stromkreises, die momentan nicht zum Antrieb des Fahrzeugs erforderlich ist, insbesondere Bremsenergie von Fahrmotoren, vorteilhaft in den zweiten Stromkreis übertragen und dort genutzt werden.

Außerdem ist über die induktive Kopplung der Zwischenkreise Energie von dem zweiten Stromkreis in den ersten Stromkreis übertragbar, um den Antrieb des Fahrzeugs zu unterstützen, beispielsweise zu einem schnelleren Anfahren des Fahrzeugs, zu einem Boosten des Fahrzeugs oder zu einem elektrischen, geräuscharmen sowie emissionsarmen oder auch emissionslosen Fahren des Fahrzeugs.

Insgesamt ermöglicht die Erfindung eine flexible Verteilung der dem Fahrzeug zur Verfügung stehenden elektrischen Energie und eine effektive Nutzung der Energieressourcen des Fahrzeugs.

Eine Ausgestaltung des erfindungsgemäßen Energieversorgungssystems sieht einen Verbrennungsmotor, einen von dem Verbrennungsmotor angetriebenen Wechselstromgenerator und einen Kopplungsstromrichter, über den dem ersten Zwischenkreis von dem Wechselstromgenerator erzeugte elektrische Energie zuführbar ist, vor. Diese Ausgestaltung der Erfindung ermöglicht vorteilhaft den Antrieb des Fahrzeugs auch mit einem Verbrennungsmotor bzw. die Einbeziehung eines Verbrennungsmotors des Fahrzeugs in ein erfindungsgemäßes Energieversorgungssystem.

Eine weitere Ausgestaltung der Erfindung sieht vor, dass die beiden Zwischenkreise unterschiedliche Zwischenkreisspannungen aufweisen. Diese Ausgestaltung der Erfindung ist auf die typische Situation zugeschnitten, dass die beiden Stromkreise unterschiedliche Funktionen haben und daher auch Zwischenkreise unterschiedlicher Zwischenkreisspannungen aufweisen. Typischerweise ist der erste Stromkreis ein Traktionsstromkreis zum Antrieb des Fahrzeugs und der zweite Stromkreis ist beispielsweise ein Hilfsbetriebestromkreis des Fahrzeugs.

Eine weitere Ausgestaltung der Erfindung sieht vor, dass der zweite Stromkreis ein Energiespeichersystem aufweist, das mit dem zweiten Zwischenkreis elektrisch verbunden ist, wobei mit dem Energiespeichersystem von dem ersten Stromkreis in den zweiten Stromkreis übertragene Energie speicherbar ist und von dem Energiespeichersystem gespeicherte Energie von dem zweiten Stromkreis in den ersten Stromkreis übertragbar ist. Diese Ausgestaltung der Erfindung ermöglicht vorteilhaft, Energie aus dem ersten Stromkreis, beispielsweise Bremsenergie von wenigstens einem Fahrmotor, in dem Energiespeichersystem des zweiten Stromkreises zu speichern und bei Bedarf in einen der beiden Stromkreise oder in beide Stromkreise oder auch zusätzlich in weitere Stromkreise einzuspeisen. Dadurch können beispielsweise bedarfsweise Hilfsbetriebe des Fahrzeugs in dem zweiten Stromkreis und/oder Fahrmotoren in dem ersten Stromkreis mit in dem Energiespeichersystem gespeicherter Energie versorgt werden.

Weitere Ausgestaltungen der Erfindung sehen vor, dass das Energiespeichersystem wenigstens eine Batterie und/oder wenigstens einen Doppelschichtkondensator aufweist. Weitergestaltungen dieser Ausgestaltungen sehen vor, dass wenigstens eine Batterie und/oder wenigstens ein Doppelschichtkondensator des Energiespeichersystems durch wenigstens einen mechanischen Schalter mit dem zweiten Zwischenkreis elektrisch verbindbar ist bzw. sind. Diese Ausgestaltungen der Erfindung ermöglichen vorteilhaft, insbesondere durch eine Kombination von Speichertechnologien aus Batterien und Doppelschichtkondensatoren, Leistungsspitzen und einen hohen Energiebedarf abdecken zu können, z. B. beim Hochfahren eines Verbrennungsmotors des Fahrzeugs aus einem Leerlaufbetrieb.

Eine weitere Ausgestaltung der Erfindung sieht vor, dass die induktive Kopplung der beiden Zwischenkreise einen Transformator umfasst. Weitergestaltungen dieser Ausgestaltung der Erfindung sehen einen in den ersten Zwischenkreis integrierten ersten Stromrichter, beispielsweise einen Vierquadrantensteller, der mit einer ersten Wicklung des Transformators verbunden ist, und/oder einen in den zweiten Zwischenkreis integrierten zweiten Stromrichter, beispielsweise einen Vierquadrantensteller oder eine B2-Brücke, der mit einer zweiten Wicklung des Transformators verbunden ist, vor. Diese Ausgestaltungen der Erfindung ermöglichen vorteilhaft zweckmäßige, mit kommerziell verfügbaren Bauteilen und dadurch einfach und kostengünstig realisierbare induktive Kopplungen der beiden Zwischenkreise.

Eine weitere Ausgestaltung der Erfindung sieht wenigstens einen in den ersten Stromkreis integrierten Bremssteller vor. Diese Ausgestaltung der Erfindung ermöglicht vorteilhaft eine effiziente Gestaltung des Energieversorgungssystems und Antriebssystems des Fahrzeugs durch eine Integration von Bremstellern für Fahrmotoren in den ersten Stromkreis.

Eine weitere Ausgestaltung der Erfindung sieht vor, dass das Fahrzeug ein Minenfahrzeug ist. Diese Ausgestaltung der Erfindung ist insbesondere vorteilhaft, wenn ein Minenfahrzeug nicht oder nicht entlang seiner gesamten Fahrstrecke durch ein Oberleitungsnetz mit Energie versorgbar ist, da in diesem Fall durch die Kopplung der Stromkreise eine Energieversorgung durch eine Oberleitung ersetzt oder unterstützt werden kann.

Ein erfindungsgemäßes Fahrzeug mit einem elektrischen Traktionssystem weist ein erfindungsgemäßes Energieversorgungssystem mit den oben bereits genannten Vorteilen auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit einer Zeichnung näher erläutert wird.

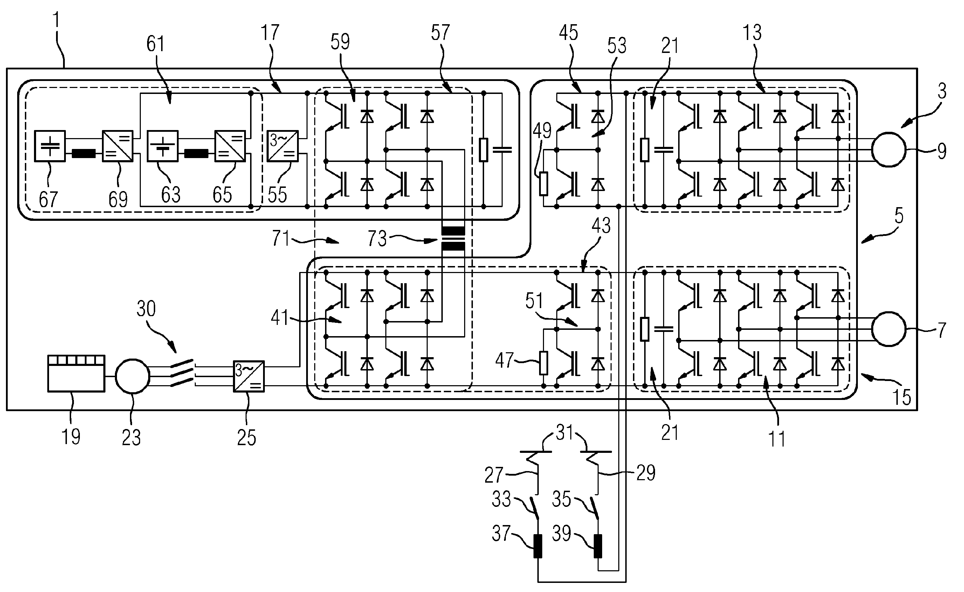

Dabei zeigt die einzige Figur schematisch ein Fahrzeug 1 mit einem elektrischen Traktionssystem 3 und ein Energieversorgungssystem 5 des Fahrzeugs 1.

Das elektrische Traktionssystem 3 weist zwei elektrische Fahrmotoren 7, 9 auf, denen jeweils von einem Traktionsstromrichter 11, 13 elektrische Energie zuführbar ist. Jeder Traktionsstromrichter 11, 13 ist als ein Wechselrichter zur Umwandlung von Gleichspannung in eine dreiphasige Wechselspannung ausgebildet. Weiterhin kann jeder der Wechselrichter auch beim Bremsen als Gleichrichter (versorgt von einem elektrischen Fahrmotor 7, 9 als Umsetzer von kinetischer Energie in elektrische Energie) verwendet werden, um Bremsenergie zurückzugewinnen.

Das Energieversorgungssystem 5 umfasst zwei voneinander galvanisch getrennte Stromkreise 15, 17 und einen Verbrennungsmotor 19, beispielsweise einen Dieselmotor, des Fahrzeugs 1.

Ein erster Stromkreis 15 umfasst die elektrischen Fahrmotoren 7, 9, die Traktionsstromrichter 11, 13, einen mit den Traktionsstromrichtern 11, 13 verbundenen ersten Zwischenkreis 21, einen von dem Verbrennungsmotor 19 antreibbaren Wechselstromgenerator 23, einen Kopplungsstromrichter 25 und Stromabnehmer 27, 29. Der Kopplungsstromrichter 25 ist ein zwischen den Wechselstromgenerator 23 und den ersten Zwischenkreis 21 geschalteter Stromrichter, beispielsweise eine B6-Brücke als Gleichrichter oder ein Pulswechselrichter als Active Front End (beispielsweise zur Rückspeisung oder zur Regelung der Zwischenkreisspannung und/oder des Wechselstromgenerators 23), über den dem ersten Zwischenkreis 21 von dem Wechselstromgenerator 23 erzeugte elektrische Energie zuführbar ist.

Die elektrische Verbindung des Wechselstromgenerators 23 und des Kopplungsstromrichters 25 ist durch eine Schalteinheit 30 unterbrechbar.

Die Stromabnehmer 27, 29 sind mit einer externen Versorgungseinrichtung 31, beispielsweise eines Oberleitungsnetzes oder einer zusätzlichen Stromschiene, verbunden und über Stromabnehmerschalter 33, 35 und wenigstens einer Induktivität 37, 39 mit den Traktionsstromrichtern 11, 13 elektrisch verbindbar, so dass eine elektrische Gleichspannung der externen Versorgungseinrichtung 31 an die Eingänge der Traktionsstromrichter 11, 13 gelegt werden kann. Dadurch können die Fahrmotoren 7, 9 von der externen Versorgungseinrichtung 31 mit elektrischer Energie versorgt werden. Der Antrieb des Fahrzeugs 1 kann durch den Verbrennungsmotor 19 erforderlichenfalls unterstützt werden.

Der erste Zwischenkreis 21 weist einen ersten Stromrichter 41, beispielsweise einen ersten Vierquadrantensteller, und für jeden Fahrmotor 7, 9 einen Bremssteller 43, 45 auf. Jeder Bremssteller 43, 45 umfasst einen Bremswiderstand 47, 49 und eine damit verbundene Bremssteller-Leistungselektronik 51, 53.

Der zweite Stromkreis 17 umfasst einen zweiten Zwischenkreis 57 mit einem zweiten Stromrichter 59, beispielsweise einem zweiten Vierquadrantensteller, einen Umrichter 55 und ein Energiespeichersystem 61. Der zweite Stromkreis 17 ist beispielsweise ein Hilfsbetriebestromkreis zur Energieversorgung von in der Figur nicht dargestellten Hilfsbetrieben des Fahrzeugs 1 wie Kompressoren oder einer Klimaanlage, die in den zweiten Stromkreis 17 integriert sind.

Das Energiespeichersystem 61 umfasst eine Batterie 63, die über einen ersten Gleichstromwandler 65 mit dem zweiten Zwischenkreis 57 elektrisch verbunden ist, und einen Doppelschichtkondensator 67, der über einen zweiten Gleichstromwandler 69 ebenso mit dem zweiten Zwischenkreis 57 elektrisch verbunden ist.

Die beiden Zwischenkreise 21, 57 sind durch eine induktive Kopplung 71 zur Energieübertragung zwischen den beiden Stromkreisen 15, 17 gekoppelt. Die induktive Kopplung 71 umfasst einen Transformator 73 mit einer ersten Wicklung, die mit dem ersten Stromrichter 41, beispielsweise einem ersten Vierquadrantensteller, verbunden ist, und einer zweiten Wicklung, die mit dem zweiten Stromrichter 59, beispielsweise einem zweiten Vierquadrantensteller, verbunden ist.

Über die induktive Kopplung 71 ist Energie, beispielsweise Bremsenergie eines Fahrmotors 7, von dem ersten Stromkreis 15 in den zweiten Stromkreis 17 übertragbar, die beispielsweise zur Energieversorgung von in der Figur nicht dargestellten Verbrauchern wie Hilfsbetrieben des Fahrzeugs 1 in dem zweiten Stromkreis 17 verwendet werden kann und/oder von dem Energiespeichersystem 61 gespeichert werden kann. Die im Energiespeichersystem 61 gespeicherte Energie kann zur Versorgung von Hilfsbetrieben verwendet werden, wenn keine Bremsenergie über die induktive Kopplung 71 in den zweiten Stromkreis 17 übertragen wird. Ferner ist über die induktive Kopplung 71 Energie, insbesondere von dem Energiespeichersystem 61 gespeicherte Energie, von dem zweiten Stromkreis 17 in den ersten Stromkreis 15 übertragbar, um den Antrieb des Fahrzeugs 1 zu unterstützen, beispielsweise zu einem schnelleren Anfahren während des Hochlaufens des Verbrennungsmotors 19 aus einem Leerlaufbetrieb, zu einem Boosten des Fahrzeugs 1 oder zu einem elektrischen, geräuscharmen sowie emissionsarmen oder auch emissionslosen Fahren ohne Verwendung des Verbrennungsmotors 19 und/oder der externen Versorgungseinrichtung 31.

Obwohl die Erfindung im Detail durch ein bevorzugtes Ausführungsbeispiel näher illustriert und beschrieben wurde, so ist die Erfindung nicht durch das offenbarte Beispiel eingeschränkt und Variationen des Ausführungsbeispiels können vom Fachmann hieraus abgeleitet werden, ohne den Schutzumfang der Erfindung zu verlassen.

## Patentansprüche

1. Energieversorgungssystem (5) eines Fahrzeugs (1) mit einem elektrischen Traktionssystem (3), das Energieversorgungssystem (5) umfassend
- einen ersten Stromkreis (15) mit wenigstens einem elektrischen Fahrmotor (7, 9) des Fahrzeugs (1), wenigstens einem Traktionsstromrichter (11, 13) zur Energieversorgung des wenigstens einen Fahrmotors (7, 9) und einem mit wenigstens einem Traktionsstromrichter (11, 13) verbundenen ersten Zwischenkreis (21),
- einen von dem ersten Stromkreis (15) galvanisch getrennten zweiten Stromkreis (17) mit einem zweiten Zwischenkreis (57),
- und eine induktive Kopplung (71) der beiden Zwischenkreise (21, 57) zur Energieübertragung zwischen den beiden Stromkreisen (15, 17).

2. Energieversorgungssystem (5) nach Anspruch 1, **gekennzeichnet durch** einen Verbrennungsmotor (19), einen von dem Verbrennungsmotor (19) angetriebenen Wechselstromgenerator (23) und einen Kopplungsstromrichter (25), über den dem ersten Zwischenkreis (21) von dem Wechselstromgenerator (23) erzeugte elektrische Energie zuführbar ist.

3. Energieversorgungssystem (5) nach einem der vorhergehenden Ansprüche,
**dadurch gekennzeichnet, dass** die beiden Zwischenkreise (21, 57) gleiche oder unterschiedliche Zwischenkreisspannungen aufweisen.

4. Energieversorgungssystem (5) nach einem der vorhergehenden Ansprüche,
**dadurch gekennzeichnet, dass** der zweite Stromkreis (17) ein Energiespeichersystem (61) aufweist, das mit dem zweiten Zwischenkreis (57) elektrisch verbunden ist, wobei mit dem Energiespeichersystem (61) von dem ersten Stromkreis (15) in den zweiten Stromkreis (17) übertragene Energie speicherbar ist und von dem Energiespeichersystem (61) gespeicherte Energie von dem zweiten Stromkreis (17) in den ersten Stromkreis (15) übertragbar ist.

5. Energieversorgungssystem (5) nach Anspruch 4,
**dadurch gekennzeichnet, dass** das Energiespeichersystem (61) wenigstens eine Batterie (63) aufweist.

6. Energieversorgungssystem (5) nach Anspruch 5,
**dadurch gekennzeichnet, dass** wenigstens eine Batterie (63) des Energiespeichersystems (61) durch einen mechanischen Schalter mit dem zweiten Zwischenkreis (57) elektrisch verbindbar ist.

7. Energieversorgungssystem (5) nach einem der Ansprüche 4 bis 6,
**dadurch gekennzeichnet, dass** das Energiespeichersystem (61) wenigstens einen Doppelschichtkondensator (67) aufweist.

8. Energieversorgungssystem (5) nach Anspruch 7,
**dadurch gekennzeichnet, dass** wenigstens ein Doppelschichtkondensator (67) des Energiespeichersystems (61) durch einen mechanischen Schalter mit dem zweiten Zwischenkreis (57) elektrisch verbindbar ist.

9. Energieversorgungssystem (5) nach einem der vorhergehenden Ansprüche,
**dadurch gekennzeichnet, dass** die induktive Kopplung (71) der beiden Zwischenkreise (21, 57) einen Transformator (73) umfasst.

10. Energieversorgungssystem (5) nach Anspruch 9, **gekennzeichnet durch** einen in den ersten Zwischenkreis (21) integrierten ersten Stromrichter (41), beispielsweise einen ersten Vierquadrantensteller, der mit einer ersten Wicklung des Transformators (73) verbunden ist.

11. Energieversorgungssystem (5) nach Anspruch 9 oder 10, **gekennzeichnet durch** einen in den zweiten Zwischenkreis (57) integrierten zweiten Stromrichter (59), beispielsweise einen zweiten Vierquadrantensteller, der mit einer zweiten Wicklung des Transformators (73) verbunden ist.

12. Energieversorgungssystem (5) nach einem der vorhergehenden Ansprüche,
**gekennzeichnet durch** wenigstens einen in den ersten Stromkreis (15) integrierten Bremssteller (43, 45).

13. Energieversorgungssystem (5) nach einem der vorhergehenden Ansprüche,
**dadurch gekennzeichnet, dass** das Fahrzeug (1) ein Minenfahrzeug ist.

14. Fahrzeug (1) mit einem elektrischen Traktionssystem (3) und einem Energieversorgungssystem (5) gemäß einem der vorhergehenden Ansprüche.
